# EUROPÄISCHE PATENTSCHRIFT

(11) **EP 1 790 533 B1**
(45) Veröffentlichungstag und Bekanntmachung des Hinweises auf die Patenterteilung: **28.05.2008**
(21) Anmeldenummer: 05025852.4
(22) Anmeldetag: 26.11.2005
(51) Int. Cl.: B60R 16/02, H01R 35/02

(54) **Verbindungseinrichtung zur Anordnung zwischen einem Lenkrad und einem Lenkstockmodul eines Kraftfahrzeuges**
Connecting device placed between the steering wheel and the steering column of a vehicle
Dispositif de connexion situé entre le volant et la colonne de direction d'un véhicule

(43) Veröffentlichungstag der Anmeldung: 30.05.2007
(73) Patentinhaber: Delphi Technologies, Inc., Troy, Michigan 48007 (US)
(72) Erfinder: Kürschner, Sven, 55597 Wöllstein (DE); Schneider, Lutz, 55583 Bad Münster/Ebernburg (DE)
(74) Vertreter: Becker, Bernd

(56) Entgegenhaltungen:
- WO-A-00/76811

## Beschreibung

Die Erfindung bezieht sich auf eine Verbindungseinrichtung zur Anordnung zwischen einem Lenkrad und einem Lenkstockmodul eines Kraftfahrzeuges nach dem Oberbegriff des Anspruchs 1, der aus der WO 00/76811 A bekannt ist.

Verbindungseinrichtungen dieser Art werden insbesondere zur Übertragung von Strom und/oder Licht und/oder Signalen zwischen drehbeweglich im Lenkrad gehaltenen und ortsfest im Bereich der Lenksäule angeordneten Anschlussstellen verwendet. Über die Anschlussstellen der Verbindungseinrichtung kann z.B. ein Airbag, eine Lenkradheizung, eine Schalteinrichtung und dergleichen mit der Spannung bzw. den Signalen zur Bewerkstelligung der Funktion versorgt werden. Eine aus der Praxis bekannte Verbindungseinrichtung besteht aus einem Statorteil und einem Rotorteil, das in dem Statorteil aufgenommen ist, wobei zwischen dem Statorteil und dem Rotorteil ein Hohlraum zur Aufnahme der Leitung ausgebildet ist, die in einer richtungsumkehrenden Schleife in dem Hohlraum geführt ist. Diese Verbindungseinrichtung ist insofern nachteilig, als insbesondere die richtungsumkehrende Schleife im Betrieb störende Geräusche verursacht.

Die EP 1 183 167 B1 offenbart eine Vorrichtung zum Übertragen von Energie zwischen zwei Endstellen mit zumindest einer mehrere Leiter aufweisenden flexiblen Leitung, welche in Windungen innerhalb eines ringförmigen Hohlraumes eines seine Längsachse konzentrisch umgebenden Gehäuses aufgenommen ist, wobei das eine Ende der flexiblen Leitung an einem Stator und das andere Ende der Leitung an einem gegenüber dem Statorteil um die Längsachse verdrehbaren Rotor des Gehäuses festgelegt ist. Die flexible Leitung ist mit ihren beiden Breitseiten über einen U-förmigen Wendeabschnitt mit zumindest einer Windung auf die axial ausgerichtete Innenwandung und beabstandet dazu, umgekehrt mit zumindest einer weiteren Windung auf die ebenfalls axial ausgerichtete Außenwandung des Gehäuses aufwickelbar und mit ihren beiden Schmalseiten zwischen der radial ausgerichteten Bodenwandung und der radial ausgerichteten Deckelwandung des Gehäuses gehalten. Der Stator besteht aus einem die Außenwandung und einen ersten Bodenwandungsbereich aufweisenden Statorunterteil und einem mit einem ersten Deckelwandungsbereich versehenen Statoroberteil. Der Rotor weist ein die Innenwandung und einen zweiten Bodenwandungsbereich besitzendes Rotorunterteil und ein mit einem zweiten Deckelwandungsbereich versehenes Rotoroberteil auf. Die Deckelwandungsbereiche und die Bodenwandungsbereiche sind so angeordnet, dass diese im Bereich der Anlage der flexiblen Leitung an der Innenwandung lediglich dem Rotor und im Bereich der Anlage der flexiblen Leitung an der Außenwandung lediglich dem Stator zugehörig sind. Dies wird durch die zweiteilige Ausbildung sowohl der Deckelwandungsbereiche als auch der Bodenwandungsbereiche und somit durch die jeweils zweigeteilte Ausführung des Stators und des Rotors erreicht.

Es ist Aufgabe der Erfindung, eine Verbindungseinrichtung der eingangs genannten Art zu schaffen, die bei einer verhältnismäßig geringen Anzahl von Einzelteilen einen geräuscharmen Betrieb sicherstellt.

Erfindungsgemäß wird die Aufgabe durch die Merkmale des Anspruchs 1 gelöst.

Dadurch, dass die Bodenwandung und/oder die Deckelwandung zwischen der Innenwandung und der Außenwandung nur abschnittweise eine Auflagefläche für die Schmalseiten der Leitung bilden, ist die Reibungsfläche der Bodenwandung und der Deckelwandung verhältnismäßig klein, womit ein geräuscharmer Betrieb der Verbindungseinrichtung einhergeht, da Kratzgeräusche beim Wickeln der Leitung minimiert sind. Insbesondere in der Ausgestaltung, in der sowohl die Bodenwandung als auch die Deckelwandung nur abschnittweise Auflageflächen für die Schmalseiten der Leitung bereitstellen, ist eine Geräuschentwicklung minimiert. Im Weiteren ist durch die einteilige Ausgestaltung des Stators und des Rotors eine verhältnismäßig geringe Anzahl von Einzelteilen sichergestellt.

In Ausgestaltung weist die Bodenwandung im Bereich der Innenwandung und/oder der Außenwandung eine Rampe zur Verengung des Hohlraums zwischen der Bodenwandung und der Deckelwandung auf. Durch die Verengung der Höhe des Hohlraums mittels der der Bodenwandung zugeordneten Rampe wird ein Klappergeräusch der Leitung im Betrieb der Verbindungseinrichtung reduziert, wobei außerhalb der Rampe ein hinreichender Freiraum für die Bewegungen der Leitung, insbesondere für deren U-förmigen Wendeabschnitt, besteht.

Vorteilhafterweise ist die Rampe der Bodenwandung im Bereich der Innenwandung Bestandteil des Rotors. Demnach dreht sich diese Rampe bei einer Relativverdrehung des Rotors zu dem Stator ebenfalls und es liegt lediglich eine verhältnismäßig geringe Relativbewegung zwischen der Leitung und dem Rotor vor, die nahezu keine Geräusche verursacht.

Um die Führung der Leitung in dem Hohlraum weitergehend zu verbessern, weist vorzugsweise die Deckelwandung im Bereich der Außenwandung eine Rampe zur Verengung des Hohlraums zwischen der Bodenwandung und der Deckelwandung auf. Zweckmäßigerweise sind die Rampen ringförmig ausgebildet. Damit ist verhindert, dass die Leitung mit ihrem U-förmigen Wendebereich die Deckelwandung oder die Bodenwandung kontaktiert.

Um ein Verklemmen oder ein Geräusch verursachendes Kratzen der Leitung beim Aufwickeln auf die Innenwandung oder die Außenwandung zu vermeiden, weisen nach einer Weiterbildung die Rampen jeweils eine Auflaufschräge für die Leitung auf. Bevorzugt sind die Rampen an ihren zum Hohlraum weisenden Umlaufkanten mit Radien versehen. Die Radien begünstigen das Auflaufen der Leitung auf die jeweilige Rampe.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:
- Fig.1: eine schematische Teildarstellung einer erfindungsgemäßen Verbindungseinrichtung im Schnitt,
- Fig.2: eine perspektivische Teildarstellung der Verbindungseinrichtung nach Fig. 1 im Schnitt,
- Fig.3: eine vergrößerte perspektivische Teildarstellung der Verbindungseinrichtung nach Fig. 2 und
- Fig.4: eine vergrößerte Darstellung der Verbindungseinrichtung nach Fig. 3 im Teilschnitt.

Die Verbindungseinrichtung umfasst im Wesentlichen ein Rotorteil 1, das in einem Statorteil 2 aufgenommen ist. Zwischen dem Rotorteil 1 und dem Statorteil 2 ist ein ringförmiger Hohlraum 3 zur Aufnahme einer mehrere einzelne elektrische Leiter umfassenden flexiblen Leitung 4 ausgebildet, die mit ihren beiden Breitseiten 5 über einen U-förmigen Wendeabschnitt 6 mit mehreren Windungen auf die axial ausgerichtete Innenwandung 7 des Rotorteils 1 sowie beabstandet dazu und umgekehrt mit mehreren weiteren Windungen auf die ebenfalls axial ausgerichtete Außenwandung 8 des Statorteils 2 aufgewickelt und mit ihren beiden Schmalseiten 9 zwischen der radial ausgerichteten Bodenwandung 10 und der radial ausgerichteten Deckelwandung 11 gehalten ist. Die Deckelwandung 11 und die Bodenwandung 10 sind im Bereich der Innenwandung 7 Bestandteile des Rotorteils 1.

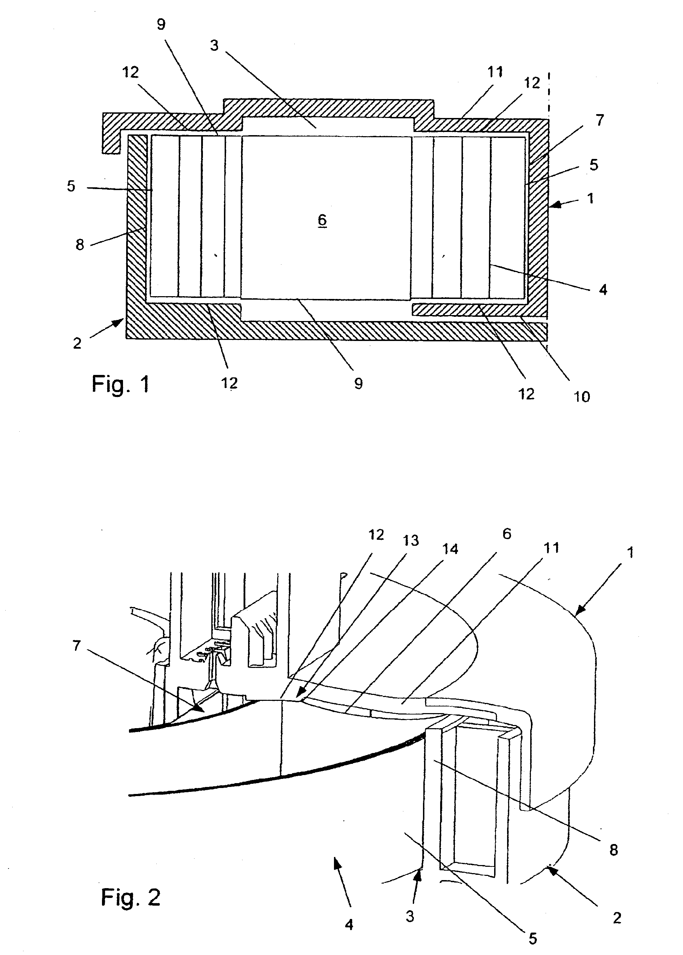

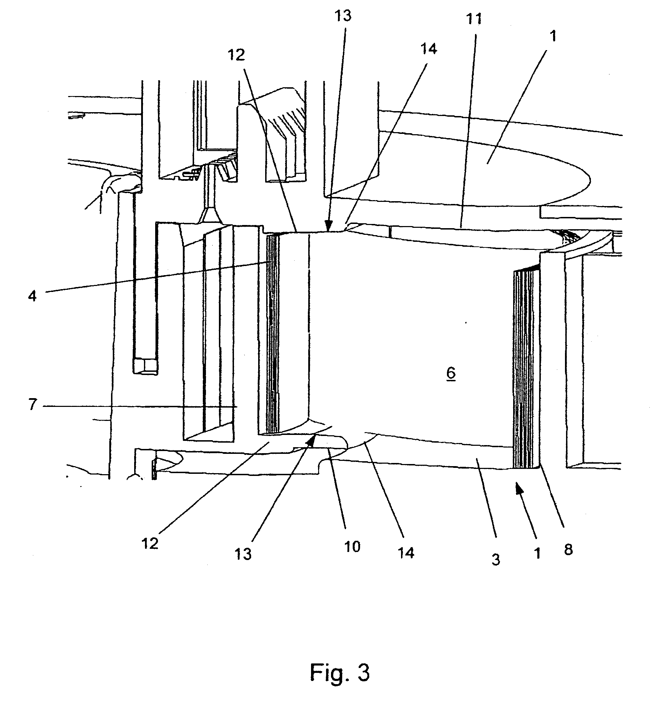

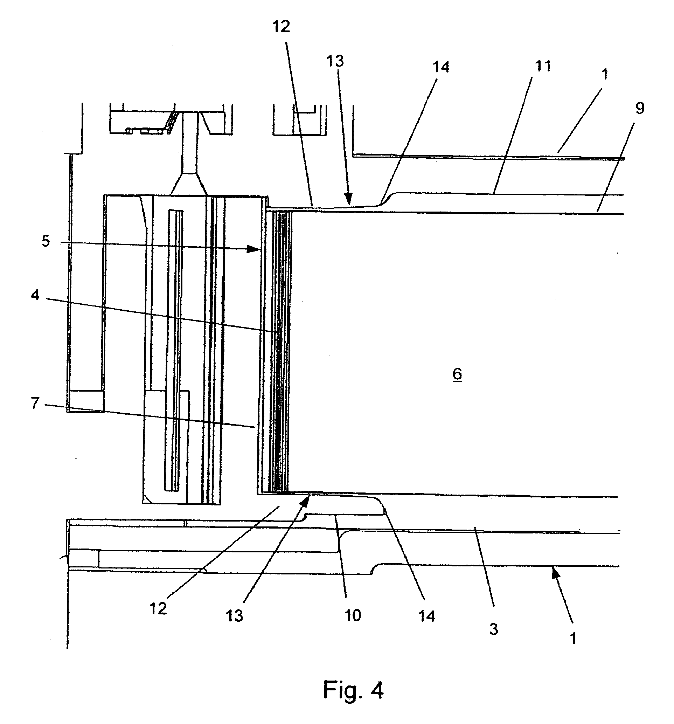

Gemäß Fig. 1 sind der Bodenwandung 10 und der Deckelwandung 11 sowohl in Bereich der Innenwandung 7 als auch der Außenwandung 8 ringförmige Rampen 12 zugeordnet. Nach den Fig. 2 bis 4 befinden sich die Rampen 12 nur im Bereich der Innenwandung 7 an der Bodenwandung 10 und der Deckelwandung 11, wobei die Rampe 12 der Bodenwandung 10 im Bereich der Innenwandung 7 sowie die Rampe 12 der Deckelwandung 11 Bestandteile des Rotorteils 1 sind. Durch die Rampen 12 sind lediglich abschnittweise Auflageflächen für die Schmalseiten 9 der Leitung 4 vorhanden und der U-förmige Wendeabschnitt 6 kommt weder an der Bodenwandung 10 noch an der Deckelwandung 11 zur Anlage.

Die Rampen 12 weisen jeweils eine zur zugeordneten Innenwandung 7 bzw. Außenwandung 8 ansteigende Auflaufschräge 13 für die Leitung 4 und an ihren zum Hohlraum 3 weisenden Umlaufkanten 14 Radien auf.

## Patentansprüche

1. Verbindungseinrichtung zur Anordnung zwischen einem Lenkrad und einem Lenkstockmodul eines Kraftfahrzeuges mit einem Statorteil (2) und einem darin aufgenommenen Rotorteil (1) zum Umschließen einer jeweils endseitig damit verbundenen, mindestens einen Leiter aufweisenden elektrischen flexiblen Leitung (4), die mit ihren beiden Breitseiten (5) über einen U-förmigen Wendeabschnitt (6) mit zumindest einer Windung auf eine axial ausgerichtete Innenwandung (7) des Rotorteils (1) sowie beabstandet dazu und umgekehrt mit zumindest einer weiteren Windung auf die ebenfalls axial ausgerichtete Außenwandung (8) des Statorteils (2) aufwickelbar und mit ihren beiden Schmalseiten (9) zwischen der radial ausgerichteten Bodenwandung (10), die im Bereich der Innenwandung (7) Bestandteil des Rotorteils (1) sowie im Bereich der Außenwandung (8) Bestandteil des Statorteils (2) ist, und der radial ausgerichteten Deckelwandung (11) des Rotorteils (1) gehalten ist, wobei die Bodenwandung (10) und die Deckelwandung (11) des Rotorteils (1) derart ausgebildet sind, dass sie zwischen der Innenwandung (7) des Rotorteils (1) und der Außenwandung (8) des Statorteils (2) nur abschnittweise eine Auflagefläche für die Schmalseiten (9) der Leitung (4) bilden, und, wobei die Deckelwandung (11) des Rotorteils (1) im Bereich der Innenwandung (7) des Rotorteils (1) eine Rampe (12) zur Verengung des Hohlraums (3) zwischen der Bodenwandung (10) und der Deckelwandung (11) des Rotorteils (1) aufweist, **dadurch gekennzeichnet, dass** die vom Bereich der Innenwandung (7) des Rotorteils (1) ausgehende Deckelwandung (11) des Rotorteils (1) sich einteilig, bis über die Außenwandung (8) des Statorteils (2) erstreckt .

2. Verbindungseinrichtung nach Anspruch 1, **dadurch gekennzeichnet, dass** die Bodenwandung (10) im Bereich der Innenwandung (7) und/oder der Außenwandung (8) eine Rampe (12) zur Verengung des Hohlraums (3) zwischen der Bodenwandung (10) und der Deckelwandung (11) aufweist.

3. Verbindungseinrichtung nach Anspruch 1 oder 2, **dadurch gekennzeichnet, dass** die Rampe (12) der Bodenwandung (10) im Bereich der Innenwandung (7) Bestandteil des Rotors (1) ist.

4. Verbindungseinrichtung nach einem der Ansprüche 1 bis 3, **dadurch gekennzeichnet, dass** die Deckelwandung (11) im Bereich der Außenwandung (8) eine Rampe (12) zur Verengung des Hohlraums (3) zwischen der Bodenwandung (10) und der Deckelwandung (11) aufweist.

5. Verbindungseinrichtung nach Anspruch 1, **dadurch gekennzeichnet, dass** die Rampen (12) ringförmig ausgebildet sind.

6. Verbindungseinrichtung nach Anspruch 1 oder 2, **dadurch gekennzeichnet, dass** die Rampen (12) jeweils eine Auflaufschräge (13) für die Leitung (4) aufweisen.

7. Verbindungseinrichtung nach einem der Ansprüche 1 bis 3, **dadurch gekennzeichnet, dass** die Rampen (12) an ihren zum Hohlraum (3) weisenden Umlaufkanten (14) mit Radien versehen sind.

## Claims

1. Connecting device for arrangement between a steering wheel and a steering column module of a motor vehicle with a stator part (2) and a rotor part (1) received therein for surrounding a flexible electric line (4), containing at least one conductor, the end of which is in each case connected with the rotor part (1), the flexible line (4) with its two broad sides (5) through a U-shaped reversing section (6) with at least one winding can be wound onto an axially directed inner wall (7) of the rotor part (1) as well as spaced therefrom and in reverse, with at least one further winding can be wound onto the also axially directed outer wall (8) of the stator part (2) and with its two narrow sides (9) is held between the radially directed base wall (10), which in the region of the inner wall (7) is part of the rotor part (1) and in the region of the outer wall (8) is part of the stator part (2), and the radially directed cover wall (11) of the rotor part (1), wherein the base wall (10) and the cover wall (11) of the rotor part (1) is constructed in such a way that between the inner wall (7) of the rotor part (1) and the outer wall (8) of the stator part (2) they form in sections only a support surface for the narrow sides (9) of the line (4), and wherein the cover wall (11) of the rotor part (1) in the region of the inner wall (7) of the rotor part (1) has a ramp (12) for narrowing the hollow space (3) between the base wall (10) and the cover wall (11) of the rotor part (1).

2. Connecting device according to claim 1, **characterised in that** the base wall (10) in the region of the inner wall (7) and/or the outer wall (8) has a ramp (12) for narrowing the hollow space (3) between the base wall (10) and the cover wall (11).

3. Connecting device according to claim 1 or 2, **characterised in that** the ramp (12) of the base wall (10) in the region of the inner wall (7) is part of the rotor (1).

4. Connecting device according to one of the claims 1 to 3, **characterised in that** the cover wall (11) in the region of the outer wall (8) has a ramp (12) for narrowing the hollow space (3) between the base wall (10) and the cover wall (11).

5. Connecting device according to claim 1, **characterised in that** the ramps (12) are of ring-shaped construction.

6. Connecting device according to claim 1 or 2, **characterised in that** the ramps (12) in each case have a guide slope (13) for the line (4).

7. Connecting device according to one of the claims 1 to 3, **characterised in that** the ramps (12) are provided with radii on their circumferential edges (14) pointing towards the hollow space (3).

## Revendications

1. Dispositif de liaison à disposer entre un volant de direction et un module de colonne de direction d'un véhicule, avec une partie de stator (2) et, logée dans celle-ci, une partie de rotor (1) pour entourer une ligne flexible électrique (4) qui y connectée par ses extrémités respectives, qui comporte au moins un conducteur et qui, par ses deux côtés larges (5), peut être enroulée, par l'intermédiaire d'une portion de retournement en forme de U (6), avec au moins une spire, sur une paroi intérieure orientée axialement (7) de la partie de rotor (1) ainsi que, à distance de celle-ci et en sens inverse, avec au moins une autre spire sur la paroi extérieure également orientée axialement (8) de la partie de stator (2) et, par ses deux côtés étroits (9), est maintenue entre la paroi de fond orientée radialement (10), laquelle fait partie intégrante de la partie de rotor (1) dans la zone de la paroi intérieure (7) et fait partie intégrante de la partie de stator (2) dans la zone de la paroi extérieure (8), et la paroi de couvercle orientée radialement (11) de la partie de rotor (1), la paroi de fond (10) et la paroi de couvercle (11) de la partie de rotor (1) étant conformées de façon à ne former, entre la paroi intérieure (7) de la partie de rotor (1) et la paroi extérieure (8) de la partie de stator (2), que dans certaines portions une surface d'appui pour les côtés étroits (9) de la ligne (4), et la paroi de couvercle (11) de la partie de rotor (1) comportant, dans la zone de la paroi intérieure (7) de la partie de rotor (1), une rampe (12) pour rétrécir la cavité (3) entre la paroi de fond (10) et la paroi de couvercle (11) de la partie de rotor (1), **caractérisé en ce que** la paroi de couvercle (11) de la partie de rotor (1) partant de la zone de la paroi intérieure (7) de la partie de rotor (1) s'étend d'un seul tenant jusqu'à la paroi extérieure (8) de la partie de stator (2).

2. Dispositif de liaison selon la revendication 1, **caractérisé en ce que** la paroi de fond (10) comporte, dans la zone de la paroi intérieure (7) et/ou de la paroi extérieure (8), une rampe (12) pour rétrécir la cavité (3) entre la paroi de fond (10) et la paroi de couvercle (11).

3. Dispositif de liaison selon la revendication 1 ou 2, **caractérisé en ce que** la rampe (12) de la paroi de fond (10) dans la zone de la paroi intérieure (7) fait partie intégrante du rotor (1).

4. Dispositif de liaison selon une des revendications 1 à 3, **caractérisé en ce que** la paroi de couvercle (11) comporte, dans la zone de la paroi extérieure (8), une rampe (12) pour rétrécir la cavité (3) entre la paroi de fond (10) et la paroi de couvercle (11).

5. Dispositif de liaison selon la revendication 1, **caractérisé en ce que** les rampes (12) sont de conformation annulaire.

6. Dispositif de liaison selon la revendication 1 ou 2, **caractérisé en ce que** les rampes (12) comportent chacune un biseau de montée (13) pour la ligne (4).

7. Dispositif de liaison selon une des revendications 1 à 3, **caractérisé en ce que**, sur leurs bords périphériques (14) tournés vers la cavité (3), les rampes (12) sont pourvues de rayons.
